# DEMANDE DE BREVET EUROPEEN

(11) **EP 3 312 443 A1**
(43) Date de publication de la demande: **25.04.2018**
(21) Numéro de dépôt: 17195535.4
(22) Date de dépôt: 09.10.2017
(51) Int. Cl.: F16C 1/10, F16C 1/26

(54) **DISPOSITIF DE FIXATION D'UN CABLE DE COMMANDE D'UNE BOITE DE VITESSES AUTOMOBILE**

(30) Priorité: 24.10.2016 FR 1660268
(71) Demandeur: DURA Automotive Holdings U.K., Ltd., Birmingham, B35 7AG (GB)
(72) Inventeur: HOUPERT, Mathieu, 92140 CLAMART (FR); PEYROU, Vincent, 78390 BOI D'ARCY (FR)
(74) Mandataire: Cabinet Laurent & Charras

(57) **Abrégé**

Dispositif de fixation (1) d'un câble (2) de commande d'une boîte de vitesses automobile, comprenant :
- un manchon (3) recevant le câble (2), comportant deux languettes (8) élastiques opposées s'étendant parallèlement l'une à l'autre et tangentiellement par rapport au manchon (3), chaque languette (8) forme partie intégrante avec le manchon (3) et comprend une rampe (10) ménagée sur une face externe ;
- une platine de réception (4) du manchon (3) comprenant :
• une ouverture (6) bordée par deux parois opposées (9) aptes à coopérer avec les rampes (10) pour permettre l'engagement du manchon (3) dans l'ouverture (6), selon une direction d'engagement parallèle aux languettes (8), en rapprochant élastiquement les languettes (8) l'une de l'autre ;
• deux épaulements (11) aptes à faire office de butées contre les rampes (10) après passage des parois et rappel élastique des languettes (8) pour empêcher le désengagement du manchon (3) et assurer son verrouillage dans la platine (4).

## Description

L'invention se rattache au secteur technique des équipements pour véhicules automobiles.

Plus particulièrement, l'invention concerne la fixation de câbles ou autres sur une platine de réception, montée au niveau d'une boîte de vitesses ou d'un levier de commande. Les câbles ou autres peuvent être affectés, par exemple, à la sélection et/ou au passage des vitesses à partir du levier de commande.

D'une manière connue, le câble présente, généralement, une douille ou un manchon de connexion destiné à être fixé dans une platine de réception, montée au niveau de la boîte de vitesses ou du levier de commande.

Dans une forme de réalisation, la douille présente une bague montée avec capacité de coulissement coaxial limitée à l'encontre d'un ressort de rappel. Ainsi, la bague peut être escamotée par rapport à une gorge que présente la douille en vue d'être engagée dans une échancrure formée au niveau de la platine de réception. Le blocage en position de la douille, dans le fond de l'échancrure, s'effectue par un bossage semi-circulaire formé de manière concentrique, au fond de l'échancrure qui est arrondie. Ces dispositions permettent d'assurer la fixation de la douille après son introduction dans l'échancrure, par un effet de clipage.

Des solutions de ce type ressortent, par exemple, de l'enseignement des brevets US 6,295,889 et US 5,579,162.

D'autres solutions ressortent de l'enseignement des brevets US 6,634,252 et US 6,490,947.

Cependant, les dispositifs de fixation divulgués dans l'état de la technique peuvent être améliorés en termes de facilité d'engagement et de verrouillage de la douille ou du manchon dans la platine support, en termes de tenue mécanique du verrouillage afin d'éviter tout déverrouillage accidentel, et en termes de facilité de désengagement lors de la maintenance.

L'invention vise à remédier à ces inconvénients d'une manière simple, sûre, efficace et rationnelle.

Le problème que se propose de résoudre l'invention est de fournir un dispositif de fixation d'un câble de commande d'une boîte de vitesses automobile, facile à verrouiller et dont le verrouillage est optimal.

Un autre objectif de l'invention est de faciliter le déverrouillage et le désengagement du manchon lors de la maintenance.

Pour résoudre un tel problème, il a été conçu et mis au point un dispositif de fixation d'un câble de commande d'une boîte de vitesses automobile, comprenant :
- un manchon de réception du câble comportant deux languettes élastiques opposées s'étendant parallèlement l'une à l'autre et tangentiellement par rapport au manchon, chaque languette comprend une rampe ménagée sur une face externe et forme partie intégrante avec le manchon ;
- une platine de réception du manchon comprenant :
   - une ouverture bordée par deux parois opposées aptes à coopérer avec les rampes pour permettre l'engagement du manchon dans l'ouverture, selon une direction d'engagement parallèle aux languettes, en rapprochant élastiquement les languettes l'une de l'autre,
   - deux épaulements aptes à faire office de butées contre les rampes après passage des parois et rappel élastique des languettes pour empêcher le désengagement du manchon et assurer son verrouillage dans la platine.

Compte tenu de ces dispositions, l'engagement du manchon dans la platine de réception est facilité. Les rampes permettent de rapprocher les languettes l'une de l'autre de sorte que l'effort d'encliquetage des rampes contre les épaulements est faible. Le verrouillage est effectué d'une manière optimale par l'encliquetage des languettes élastiques dans la platine de réception. De plus, l'agencement des rampes sur les languettes élastiques et des épaulements complémentaires de butées permet de garantir une tenue au désengagement efficace. En effet, l'effort d'encliquetage est faible, mais l'effort de désengagement est important. Le manchon ne peut pas se désengager accidentellement car les languettes flambent et viennent buter contre le manchon. Le désengagement accidentel est possible uniquement en cassant les languettes. Les languettes sont suffisamment résistantes pour prévenir toute casse et tout désengagement accidentel. Le désengagement manuel du manchon est effectué en rapprochant manuellement les languettes l'une de l'autre pour sortir les rampes de l'emprise des épaulements. Le désengagement manuel est simple et facile.

Pour faciliter davantage l'engagement du manchon, la platine de réception comprend deux rainures de guidage opposées s'étendant parallèlement aux languettes et recevant chacune de manière coulissante une partie en saillie du manchon pour le guidage de l'engagement.

De préférence, les parties en saillie du manchon comprennent chacune une languette élastique inclinée pour venir se contraindre élastiquement contre des parois latérales des rainures lors de l'engagement du manchon et créer une résistance et un maintien en position du manchon lors de l'engagement.

Avantageusement, les parois opposées de la platine destinées à coopérer avec les rampes des languettes comprennent un profil en rampe complémentaire pour faciliter l'engagement du manchon.

Selon une forme de réalisation particulière, la platine de réception comprend une forme générale en U, dont les deux branches du U définissent entre elles l'ouverture de la platine, et forment les deux parois opposées.

De préférence, et pour améliorer l'ergonomie et faciliter le désengagement du manchon, la longueur des languettes est telle qu'après engagement du manchon, les extrémités libres des languettes débordent de la platine pour permettre d'agir manuellement sur celles-ci pour les rapprocher l'une de l'autre et désengager le manchon.

De préférence, les extrémités libres des languettes sont inclinées en éloignement l'une de l'autre pour faciliter davantage le rapprochement manuel des languettes pour le désengagement du manchon.

L'invention est exposée ci-après plus en détail à l'aide des figures des dessins annexés dans lesquels :
- la figure 1 est une vue en perspective du manchon d'un dispositif de fixation d'un câble de commande d'une boîte de vitesses automobile, selon l'invention, monté autour du câble ;
- la figure 2 est une vue en perspective correspondant à la figure 1 avant engagement du manchon dans une platine de réception, le câble n'étant pas représenté ;
- la figure 3 est une vue partielle en perspective du dispositif après engagement du manchon dans la platine, illustrant en détail le verrouillage du manchon ;
- la figure 4 est une vue similaire à celle de la figure 3, le dispositif étant représenté de vue de face ;
- la figure 5 est une vue partielle en perspective illustrant la partie en saillie du manchon et sa languette élastique aptes à coopérer avec les rainures de guidage de la platine de réception ;
- la figure 6 est une vue en perspective illustrant la mise en place du dispositif selon l'invention sur le carter d'une boîte de vitesses d'un véhicule automobile.

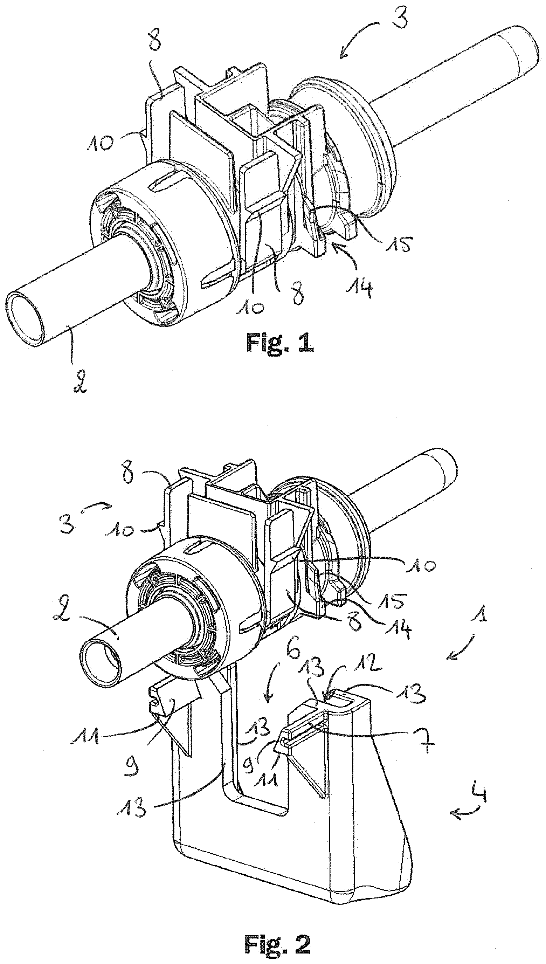

Comme indiqué, et en référence aux figures 1 à 6, l'invention concerne un dispositif de fixation (1) d'un câble (2) de commande d'une boîte de vitesses automobile.

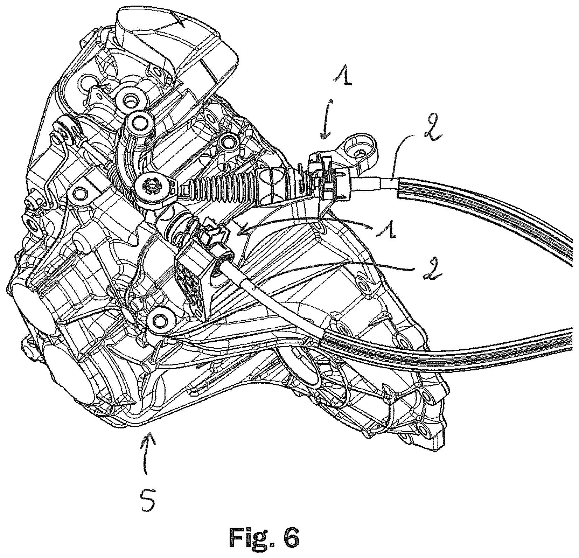

En référence aux figures 1 à 4, le dispositif (1) comprend un manchon (3) recevant le câble (2) et engagé dans une platine de réception (4) pour la fixation en tant que telle du câble (2). Par exemple, et en référence à la figure 6, la platine (4) est montée sur une partie d'une boîte de vitesses, tel que le carter (5). En référence à la figure 2, la platine de réception (4) présente une ouverture (6) pour l'engagement du manchon (3) qui est assujetti au câble (2) par tout moyen connu et approprié.

Selon une forme de réalisation préférée, la platine de réception (4) comprend une forme générale en U. Les deux branches (7) du U définissent entre elles l'ouverture (6) de la platine (4) pour l'engagement du manchon (3).

Le manchon (3), de forme générale cylindrique, comprend deux languettes (8) élastiques opposées s'étendant parallèlement l'une à l'autre et tangentiellement par rapport au manchon (3). Les languettes (8) forment parties intégrantes avec le manchon (3). Le manchon (3) est conformé pour être engagé dans la platine (4) coaxialement à l'ouverture (6), c'est-à-dire avec les languettes (8) parallèles aux parois opposées (9) et parallèles de la platine de réception (4) formées par les branches (7) du U et bordant l'ouverture (6).

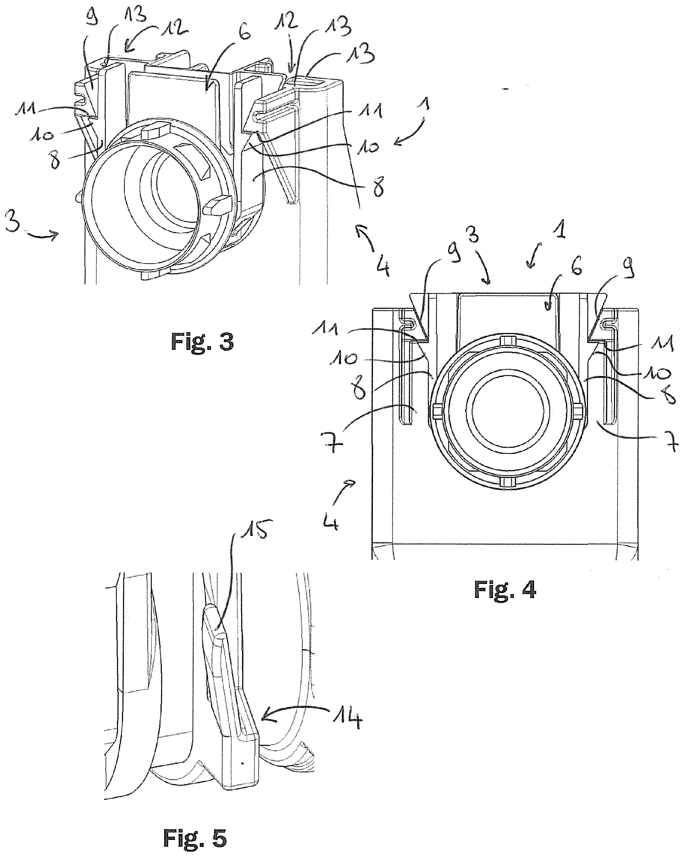

Les faces externes des languettes (8), destinées à être en regard des parois opposées (9) de la platine de réception (4), comprennent chacune une rampe (10) pour provoquer le rapprochement des languettes (8), par déformation élastique, lors de l'engagement du manchon (3) dans l'ouverture (6) de la platine de réception (4) entre les deux parois opposées (9). Pour faciliter davantage l'engagement du manchon (3), las parois opposées (9) comprennent un profil en rampe complémentaire. L'effort d'engagement est faible et l'engagement est facilité. En d'autres termes, lors de l'engagement du manchon (3), les rampes (10) viennent buter contre les parois opposées (9) latérales pour, au fur et à mesure de l'engagement, provoquer le rapprochement des languettes (8) jusqu'à ce que les rampes (10) s'encliquètent chacune sur un épaulement (11) et entrainent le rappel élastique des languettes (8) dans une position d'engagement et de verrouillage du manchon (3), notamment illustrée aux figures 3 et 4.

En effet, les épaulements (11) prolongent perpendiculairement les parois opposées (9) de la platine (4), et font office de butées contre une paroi complémentaire des rampes (10), après passage des parois (9) et rappel élastique des languettes (8) pour empêcher le désengagement du manchon (3) et assurer son verrouillage dans la platine (4). La tenue au désengagement est efficace. L'effort d'encliquetage est faible, mais l'effort de désengagement est important. Le manchon (3) ne peut pas se désengager accidentellement car les languettes (8) flambent et viennent buter contre le manchon (3).

Pour faciliter le guidage de l'engagement du manchon (3), les parois opposées (9) de la platine de réception (4) comprennent chacune une rainure de guidage (12). Les rainures de guidage (12) sont, par exemple formées entre deux nervures (13) et sont disposées face à face le long des parois opposées (9) en s'étendant selon la direction d'engagement du manchon (3).

En référence aux figures 1, 2 et 5, le manchon (3) comprend des parties en saillies (14) opposées et disposées pour s'engager en coulissement dans les rainures de guidage (12) lors de l'engagement du manchon (3) dans la platine de réception (4).

Les parties en saillie (14) comprennent chacune une languette élastique inclinée (15) adaptée pour venir se contraindre élastiquement contre des parois latérales des rainures (12) lors de l'engagement du manchon (3) et créer une résistance et un maintien en position du manchon (3) lors de l'engagement.

La longueur des languettes (8) est telle qu'après engagement du manchon (3), les extrémités libres des languettes (8) débordent de la platine (4) pour permettre d'agir manuellement sur celles-ci pour les rapprocher l'une de l'autre et désengager le manchon (3).

Les extrémités libres des languettes (8) sont de préférence inclinées en éloignement l'une de l'autre pour faciliter davantage l'action manuelle de désengagement et la préhension des languettes.

## Revendications

1. Dispositif de fixation (1) d'un câble (2) de commande d'une boîte de vitesses automobile, le dispositif (1) comprenant un manchon (3) recevant le câble (2), et une platine de réception (4) du manchon (3), ***caractérisé* en ce que** le manchon (3) comprend deux languettes (8) élastiques opposées s'étendant parallèlement l'une à l'autre et tangentiellement par rapport au manchon (3), chaque languette (8) forme partie intégrante avec le manchon (3) et comprend une rampe (10) ménagée sur une face externe, ***et en ce que*** la platine de réception (4) comprend :
- une ouverture (6) bordée par deux parois opposées (9) aptes à coopérer avec les rampes (10) pour permettre l'engagement du manchon (3) dans l'ouverture (6), selon une direction d'engagement parallèle aux languettes (8), en rapprochant élastiquement les languettes (8) l'une de l'autre,
- deux épaulements (11) aptes à faire office de butées contre les rampes (10) après passage des parois et rappel élastique des languettes (8) pour empêcher le désengagement du manchon (3) et assurer son verrouillage dans la platine (4).

2. Dispositif selon la revendication 1, ***caractérisé* en ce que** la platine de réception (4) comprend deux rainures de guidage (12) opposées s'étendant parallèlement aux languettes (8) et recevant chacune de manière coulissante une partie en saillie (14) du manchon (3) pour le guidage de l'engagement.

3. Dispositif selon la revendication 2, ***caractérisé* en ce que** les parties en saillie (14) du manchon (3) comprennent chacune une languette élastique inclinée (15) pour venir se contraindre élastiquement contre des parois latérales des rainures (12) lors de l'engagement du manchon (3) et créer une résistance et un maintien en position du manchon (3) lors de l'engagement.

4. Dispositif selon la revendication 1, ***caractérisé* en ce que** les parois opposées (9) de la platine (4) destinées à coopérer avec les rampes (10) des languettes (8) comprennent un profil en rampe complémentaire pour faciliter l'engagement du manchon (3).

5. Dispositif selon la revendication 1, ***caractérisé* en ce que** la platine de réception (4) comprend une forme générale en U, dont les deux branches (7) du U définissent entre elles l'ouverture (6) de la platine (4), et forment les deux parois opposées (9).

6. Dispositif selon la revendication 1, ***caractérisé* en ce que** la longueur des languettes (8) est telle qu'après engagement du manchon (3), les extrémités libres des languettes (8) débordent de la platine (4) pour permettre d'agir manuellement sur celles-ci pour les rapprocher l'une de l'autre et désengager le manchon (3).

7. Dispositif selon la revendication 6, ***caractérisé* en ce que** les extrémités libres des languettes (8) sont inclinées en éloignement l'une de l'autre.
